(19) Europäisches Patentamt
European Patent Office
Office européen des brevets

(11) **EP 2 067 227 B1**

(12) **EUROPÄISCHE PATENTSCHRIFT**

(45) Veröffentlichungstag und Bekanntmachung des Hinweises auf die Patenterteilung:
**24.11.2010 Patentblatt 2010/47**

(21) Anmeldenummer: **07818134.4**

(22) Anmeldetag: **07.09.2007**

(51) Int Cl.:
***H02J 3/06*** (2006.01)       ***H02M 1/14*** (2006.01)
***H02M 5/458*** (2006.01)

(86) Internationale Anmeldenummer:
**PCT/EP2007/007966**

(87) Internationale Veröffentlichungsnummer:
**WO 2008/031587 (20.03.2008 Gazette 2008/12)**

(54) **ANTRIEBSENERGIEVERSORGUNG BEI SCHIENENFAHRZEUGEN**

DRIVE ENERGY SUPPLY IN RAIL VEHICLES

ALIMENTATION EN ÉNERGIE MOTRICE POUR VÉHICULES FERROVIAIRES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **14.09.2006 DE 102006043941**

(43) Veröffentlichungstag der Anmeldung:
**10.06.2009 Patentblatt 2009/24**

(73) Patentinhaber: **Bombardier Transportation GmbH 10785 Berlin (DE)**

(72) Erfinder: **SCHOLTEN, Johannes 67283 Obrigheim (DE)**

(74) Vertreter: **Patentanwälte Bressel und Partner Park Kolonnaden Potsdamer Platz 10 10785 Berlin (DE)**

(56) Entgegenhaltungen:
**EP-A- 0 514 580       WO-A-99/19959
DE-A1-102004 033 379   GB-A- 2 397 445
US-A- 6 137 704**

**Beschreibung**

Die Erfindung betrifft eine Anordnung für die Antriebsenergieversorgung eines Schienenfahrzeuges. Die Erfindung betrifft ferner ein Schienenfahrzeug, das eine solche Anordnung aufweist. Unter dem Begriff Schienenfahrzeug wird auch ein Schienenfahrzeug-Verband, z. B. ein Zug mit mehreren Triebwagen verstanden.

Bei der Anordnung handelt es sich um eine Anordnung mit Stromrichtern und deren Verbindungen. Dabei werden netzseitige Stromrichter (Gleichrichter), im Folgenden als Netzstromrichter bezeichnet, mit motorseitigen Stromrichtern (Wechselrichter), im Folgenden als Motorstromrichter bezeichnet, verbunden.

Wechselstromantriebe für Schienenfahrzeuge, die meist an einer Wechselspannungs-Oberleitung betrieben werden, weisen üblicherweise einen Netzstromrichter (Gleichrichter) auf, der in gängiger Ausführungsform als 4-Quadrantensteller (im folgenden auch als 4QS bezeichnet) an die Sekundärseite eines Transformators angeschlossen ist. Die Gleichspannungsseite des Netzstromrichters ist üblicherweise mit einem Glättungskondensator verbunden, dessen Spannung von einer Netzstromrichterregelung auf einen gewünschten Wert gehalten wird. Die Leitungsinduktivität zwischen dem Glättungskondensator und dem Netzstromrichter muss gering sein, da es beim taktenden Betrieb der Ventile des Netzstromrichters sonst zu Schaltüberspannungen an den Ventilen kommt. Dies gilt sowohl für IGBT (Insulated Gate Bipolar Transistor) als auch für GTO (Gate Turn Off) Ventilsätze.

Aus dem Glättungskondensator des Netzstromrichters wird die Gleichspannungsseite des oder der angeschlossenen Motorwechselrichter gespeist. Auch für den Motorwechselrichter ist wieder ein Glättungskondensator vorgesehen, der über kurze Leitungswege mit den Wechselrichterventilsätzen verbunden ist. Daher sind mindestens zwei Glättungskondensatoren miteinander durch je eine Plus- und eine Minusleitung, d. h. zwei Gleichspannungsleitungen auf unterschiedlichem elektrischem Potenzial, verbunden. Die Plus- und Minusleitung, gegebenenfalls mit den daran angeschlossenen oder darin vorgesehenen Bauteilen, wie den Glättungskondensatoren und zumindest einer Glättungsdrossel (s.u.) wird hier auch als Gleichspannungs-Zwischenkreis bezeichnet, obwohl die Leitungen selbst nicht einen geschlossenen Kreis (Masche) bilden.

Eine derartige Anordnung von Kondensatoren und den unvermeidlichen Leitungsinduktivitäten stellt jedoch ein schwingungsfähiges System dar (LC-Resonanzkreis). Bei typischen Leitungslängen von einigen Metern ergeben sich Resonanzfrequenzen um 1 kHz. Der Bereich zwischen 100 Hz und 10 kHz ist jedoch für den Betrieb nachteilig, da in diesem Bereich üblicherweise die Taktfrequenzen der angeschlossenen Netz- und Motorstromrichter liegen. Daher sind die Motorstromrichter in den dieser Erfindung betreffenden Anordnungen über Glättungsdrosseln mit Resonanzfrequenzen unter 100 Hz an die räumlich entfernten Netzstromrichter angeschlossen.

Liegt die Resonanzfrequenz des LC-Resonanzkreises unter 100 Hz können die Schwingungsamplituden durch regelungstechnische Maßnahmen oder durch passives Bedämpfen klein gehalten werden. Oberhalb von 10 kHz sind die Schwingungsamplituden durch Stromverdrängung in den Leitungen oder durch zusätzliche Bedämpfung gering. Außerdem liegt die Amplitude der Schwingungen oberhalb 10 kHz und unterhalb 100 Hz nicht hoch, da die Anregungen im Wesentlichen im Bereich der Ventilschaltfrequenzen von einigen 100Hz bis einigen wenigen kHz stattfinden.

Aufgrund der Schwingungsproblematik ist man bisher gezwungen, Netzstromrichter und Antriebswechselrichter relativ nahe beieinander aufzustellen, z.B. Seite an Seite oder Rücken an Rücken mit Leitungslängen von maximal ein bis zwei Metern. Daher sind die Freiheiten bei der räumlichen Anordnung der Stromrichter im Schienenfahrzeug stark eingeschränkt. Auch kann eine hinsichtlich des Gewichts optimale Aufteilung der Antriebskomponenten oft nicht erreicht werden. Eine schlechte Aufteilung führt zu einer ungünstigen Achslastausnutzung.

Eine weitere Problematik betrifft Schienenfahrzeuge, die für den Betrieb an Gleichspannungsnetzen konzipiert waren und bei denen die Motorwechselrichter räumlich weit entfernt voneinander vorgesehen bzw. eingebaut sind. Wenn eine Einspeisung für Wechselstrom-Oberleitungsbetrieb ergänzt werden soll, um so einen Zweisystembetrieb zu ermöglichen, ist im Bereich des Motorwechselrichters oft kein Raum mehr für den Netzstromrichter vorhanden.

Wenn mehrere Netzstromrichter vorgesehen werden sollen, z.B. um höhere Leistungen zu ermöglichen oder um Redundanz zu erreichen, bestehen folgende Möglichkeiten:

a) Es können voneinander unabhängige, also galvanisch voneinander getrennte Antriebssysteme vorgesehen werden. Netzstromrichter und Motorstromrichter werden in diesem Fall räumlich eng benachbart angeordnet. Eine Glättungsdrossel zwischen Netzstromrichter und Motorstromrichter ist dann nicht erforderlich.

b) Alle Stromrichter werden sehr nahe beieinander angeordnet, also alle Netzstromrichter und Motorstromrichter sind an einem Ort vereint.

c) Die Netzstromrichter werden nahe beieinander angeordnet werden. Die Motorstromrichter sind über Glättungsdrosseln an die Netzstromrichter angeschlossen. Die Netzstromrichter sollen galvanisch verbunden sein.

d) Die Netzstromrichter sind untereinander über mindestens eine Glättungsdrossel verbunden. Die Motorstromrichter sind über je mindestens eine weitere Glättungsdrossel an die Netzstromrichter angeschlossen. Insgesamt sind also mindestens 3 Glättungsdrosseln erforderlich. Lösung b) ist häufig bei Lokomotivantrieben realisiert. Für einen Triebzug mit verteilten Antrieben ist dies aber nicht möglich. Dort wird häufig die Lösung a) gewählt, wobei der Zwang, (bezogen auf ein Antriebssystem) Motorstromrichter und Netzstromrichter nahe beieinander aufzustellen, bestehen bleibt, wenn man keine Glättungsdrosseln zwischen Motorstromrichter und Netzstromrichter einbauen möchte.

Möglichkeit c) hat den Nachteil, dass die Netzstromrichter nahe beieinander aufgestellt sein müssen. Wünschenswert ist es aber, diese Einschränkung zu überwinden, ohne die Nachteile einer dritten Glättungsdrossel in Kauf nehmen zu müssen.

Eine Möglichkeit, Stromrichter voneinander räumlich zu trennen aber galvanisch zu verbinden ist die elektrische Verbindung der beiden Gleichspannungs-Zwischenkreise, d. h. der Glättungskondensatoren miteinander, wobei mindestens eine Glättungsdrossel in der Verbindung vorgesehen wird. Die Glättungsdrossel setzt die Resonanzfrequenz der Schwingungen so weit herab, dass eine regelungstechnische oder passive Bedämpfung erfolgen kann, typischerweise also unter 100 Hz Schwingfrequenz (siehe oben).

Die folgende Problematik betrifft einen weiteren Aspekt von Systemen mit verteilten Stromrichtern, der optional zusätzlich zu dem Hauptaspekt der Erfindung realisiert werden kann: Wenn der Netzstromrichter auch rückspeisefähig sein soll, d. h. Bremsenergie ins Netz rückgespeist werden soll (dies wird heutzutage gefordert), indem man einen 4-Quadrantensteller einsetzt, so kommt es bei kurzen Kontaktunterbrechungen zwischen Stromabnehmer und Netz zur Unterbrechung des Netzstromes. Auch eine plötzliche Ventilsperre im Netzstromrichter aufgrund des Ansprechens von internen Überwachungen führt zur Unterbrechung des Netzstromes. Die Folge sind zu hohe Spannungen an dem Glättungskondensator des Netzstromrichters. Diese Überspannungen entstehen, weil die Glättungsdrosseln zwischen Motorstromrichter und

Netzstromrichter im Bremsbetrieb den Stromfluss vom Motorstromrichter zum Netzstromrichter zunächst einmal aufrechterhalten, die Energie aber netzseitig keinen Abnehmer mehr findet. Diese Energie lädt nun den Netzstromrichter-Glättungskondensator auf, sodass seine Spannung stark ansteigt. So können auch für die Halbleiterventile des Netzstromrichters unzulässig hohe Spannungswerte erreicht werden. Für die Begrenzung der Spannung am Glättungskondensator des Netzstromrichters gab es zwei Möglichkeiten:

Einbau eines Glättungskondensators mit hoher Kapazität C, dessen Energieaufnahmevermögen $\frac{1}{2} C * (\Delta U^2) = \frac{1}{2} L * I^2$ entspricht. D.h. die in den Glättungsdrosseln (mit Induktivität L) gespeicherte magnetische Energie wird entweder durch einen großen Spannungshub $\Delta U$ (der unerwünscht ist und den es zu vermeiden gilt) oder durch den Kondensator mit entsprechend großer Kapazität C aufgenommen. Mit I ist in der Gleichung der Strom bezeichnet. Der Einbau eines solchen Kondensators stellt aber für den normalen Betrieb eine Überdimensionierung dar. Dies bringt hohe Kosten, einen Verbrauch von Bauraum und eine Gewichtszunahme mit sich.

Es kann ein aktiver elektronischer Überspannungsbegrenzer eingesetzt werden, der einen Widerstand parallel zum Glättungskondensator zuschaltet, wenn die Spannung einen zu hohen Wert annimmt. Dadurch fließt ein Entladestrom, der die Spannung am Kondensator wieder absinken lässt oder begrenzt. Diese Lösung ist jedoch ebenfalls aufwendig, da neben dem Widerstand ein leistungsfähiger elektronischer Schalter, eine Ansteuereinheit, ein Spannungssensor und eine elektronische Steuerschaltung (mit Komparator) benötigt werden.

Die Glättungsdrossel in der Verbindung der beiden Gleichspannungs-Leitungen hat den Nachteil, dass auch sie (bei einer Abstimmung der Resonanzfrequenz auf z. B. unter 100 Hz) relativ groß und schwer ist. Außerdem führt eine solche Drossel zu elektrischen Verlusten. Auch ist es bei einer Glättungsdrossel mit hoher Induktivität (von typischerweise im Bereich von 200 μH) oder höher erforderlich, für jeden Netzstromrichter einen eigenen Saugkreis vorzusehen, der die zweite harmonische Schwingung der Netzfrequenz (d.h. z. B. 100 Hz bei 50 Hz-Netzen oder 33Hz bei 16 2/3 Hz-Netzen) filtert. Zwei oder mehrere kleine Saugkreise sind aber voluminöser und daher schwieriger unterzubringen als ein einzelner Saugkreis. Zusätzlich entfällt die ausgleichende Wirkung durch die versetzte Taktung beider Netzstromrichter und die Spannungswelligkeit am Netzstromrichter-Glättungskondensator nimmt daher zu. Die Spannungswelligkeit muss wiederum durch eine Vergrößerung der Kapazität des Glättungskondensators ausgeglichen werden.

Gemäß dem Hauptaspekt dieser Erfindung wird eine Anordnung vorgeschlagen, in der alle Motorstromrichter und Netzstromrichter galvanisch verbunden sein sollen. Dabei sollen zwischen dem Motorstromrichter oder den Motorstromrichtern einerseits und den zugehörigen Netzstromrichtern andererseits Glättungsdrosseln hoher Induktivität vorgesehen werden können. Die Netzstromrichter sollen ebenfalls galvanisch miteinander verbunden, jedoch räumlich getrennt voneinander aufgestellt sein.

EP 0514580 A1 betrifft eine Umrichteranordnung zur Erzeugung einer in Amplitude und Frequenz veränderbaren, mehrphasigen Spannung aus einer vorgegebenen Spannung zur Speisung von wenigstens zwei Motoren, wobei jedem Motor ein aus einem Eingangsstromrichter, einem Zwischenkreis und einem motorseitigen Stromrichter bestehender Umrichter zugeordnet ist. Bei einer in einem der Umrichter auftretenden Störung sind die Zwischenkreise durch wenigstens einen Schalter derart trennbar, dass der ungestörte Umrichter weiterhin betreibbar bleibt.

US6,137,704 beschreibt eine Vorrichtung zum Umwandeln einer AC-Eingangsleistung in eine DC-Leistung und weiterhin Umwandeln der DC-Leistung in eine gewünschte AC-Leistung. Eine Leistungs-Welligkeit, die an der DC-Ausgangsseite des Konverters auftritt und eine Frequenz hat, die doppelt so groß ist wie die Leistungsquelle, wird durch einen LC-Filter oder eine Induktivität absorbiert, welche die selbe Resonanzfrequenz hat, so dass die Kapazität des Glättungskondensators verkleinert werden kann.

Es ist eine Aufgabe der vorliegenden Erfindung, eine über mehr als einen Motorstromrichter realisierte Antriebsenergieversorgung für Schienenfahrzeuge anzugeben, bei der große Entfernungen erlaubt sind:

a) sowohl zwischen den Motorstromrichtem
b) als auch zwischen den Motorstromrichtern und den Netzstromrichtern
c) als auch zwischen den Netzstromrichtem untereinander obwohl die Zwischenkreise alle galvanisch miteinander verbunden sind. Dabei sollen die Nachteile einer dritten Glättungsdrossel vermieden werden.

Die beigefügten Ansprüche definieren den Schutzbereich.

Die Erfindung betrifft insbesondere eine Anordnung für die Antriebsenergieversorgung eines Schienenfahrzeuges, wobei die Anordnung Folgendes aufweist:

- einen ersten Gleichspannungs-Zwischenkreis zur Verbindung eines ersten Netzstromrichters mit zumindest einem ersten Motorstromrichter,
- einen zweiten Gleichspannungs-Zwischenkreis zur Verbindung eines zweiten Netzstromrichters mit dem ersten Motorstromrichter oder mit zumindest einem zweiten Motorstromrichter,
- einen ersten Glättungskondensator, über den die Potentiale und/oder Leitungen des ersten Gleichspannungs-Zwischenkreises (kapazitiv, d.h. ohne galvanische Verbindung) miteinander verbunden sind,
- einen zweiten Glättungskondensator, über den die Potentiale und/oder Leitungen des zweiten Gleichspannungs-Zwischenkreises miteinander verbunden sind.

Auch betrifft eine Ausgestaltung der Erfindung eine Anordnung für die Antriebsenergieversorgung eines Schienenfahrzeuges, wobei die Anordnung Folgendes aufweist:

- einen ersten Netzstromrichter, der einen Gleichspannungsanschluss aufweist, mit dem er an einen ersten Glättungskondensator angeschlossen ist, wobei der Gleichspannungsanschluss einen Plus- und einen Minuspol aufweist,

- einen zweiten Netzstromrichter, der einen Gleichspannungsanschluss aufweist, mit dem er an einen zweiten Glättungskondensator angeschlossen ist, wobei der Gleichspannungsanschluss einen Plus- und einen Minuspol aufweist,
- mindestens einen Motorstromrichter, der einen Gleichspannungsanschluss aufweist, mit dem er an einen dritten, dem jeweiligen Motorstromrichter zugeordneten Glättungskondensator angeschlossen ist, wobei der Gleichspannungsanschluss einen Plus-und einen Minuspol aufweist,
- eine Verbindungsleitung, die die Plus-Pole des ersten Netzstromrichters und zumindest eines der Motorstromrichter (oder des Motorstromrichters) miteinander verbindet,
- eine Verbindungsleitung, die die Plus-Pole des zweiten Netzstromrichters und zumindest eines der Motorstromrichter (oder des Motorstromrichters) miteinander verbindet,
- eine Verbindungsleitung, die die Minus-Pole des ersten Netzstromrichters und zumindest eines der Motorstromrichter (oder des Motorstromrichters) miteinander verbindet und
- eine Verbindungsleitung, die die Minus-Pole des zweiten Netzstromrichters und zumindest eines der Motorstromrichter (oder des Motorstromrichters) miteinander verbindet.

Dabei kann (z. B. in geeigneten Unterbrechungen) in den Verbindungsleitungen, jeweils zumindest eine Induktivität (Drossel) eingebracht sein.

Der erste Gleichspannungs-Zwischenkreis ist dem ersten Netzstromrichter zugeordnet. Er kann daher auch als Zwischenkreis des ersten Netzstromrichters bezeichnet werden. Entsprechendes gilt für den Zwischenkreis des zweiten Netzstromrichters. Insbesondere kann jeder der Gleichspannungs-Zwischenkreise jeweils einen Netzstromrichter mit einem Motorstromrichter verbinden, wobei es sich um denselben oder verschiedene Motorstromrichter handeln kann.

Der erste Glättungskondensator ist insbesondere nahe bei dem ersten Netzstromrichter angeordnet und kann daher als Glättungskondensator des ersten Netzstromrichters bezeichnet werden. Entsprechendes gilt für den zweiten Glättungskondensator, der insbesondere nahe bei dem zweiten Netzstromrichter angeordnet ist. Dabei ist der jeweilige Glättungskondensator zwischen die beiden Potenziale des entsprechenden Gleichspannungs-Zwischenkreises geschaltet, d.h. eine Elektrode des Glättungskondensators ist mit dem höheren Potential verbunden und die andere Elektrode ist mit dem niedrigeren Potential verbunden. Der Anschluss eines Stromrichters an dem ihm zugeordneten Glättungskondensator erfolgt vorzugsweise immer in der Weise, dass der Gleichspannungs-Pluspol direkt mit dem einen Pol des Kondensators und der Gleichspannungs-Minuspol direkt mit dem anderen Pol des Kondensators verbunden wird/ist. Direkt bedeutet, dass die genannten Induktivitäten nicht zwischen den genannten Polen in die Verbindungsleitungen eingebracht sind.

Es wird vorgeschlagen, bei einem Antriebssystem mit zumindest zwei Netzstromrichtem eine galvanische elektrische Verbindung (im Folgenden auch Zwischenkreis-Verbindung genannt) zwischen einem ersten Gleichspannungs-Glättungskondensator (bzw. Zwischenkreis) und einem zweiten Gleichspannungs-Glättungskondensator (bzw. Zwischenkreis) herzustellen.

In der Praxis besteht die Verbindung insbesondere aus zwei Teilen (Hin- und Rückleiter), wobei jeweils die Plus-Pole der Glättungskondensatoren bzw. Zwischenkreise über eine erste Verbindung sowie die jeweiligen Minus-Pole der Glättungskondensatoren Zwischenkreise über eine zweite Verbindung miteinander verbunden sind.

Auf diese Weise entsteht eine Masche (d.h. ein Schaltungskreis), die durch jeweils einen Glättungskondensator der beiden Zwischenkreise, durch die erste Zwischenkreis-Verbindung, durch die zweite Zwischenkreis-Verbindung und abhängig von der Ausführungsform optional auch von Abschnitten der Gleichspannungsleitungen der beiden Zwischen gebildet ist. Anders ausgedrückt gehören alle Leitungen zu der Masche, die auf dem Pfad vom Pluspol des ersten Glättungskondensators zum Pluspol des zweiten Glättungskondensators liegen sowie alle Leitungen, die vom Minuspol des ersten Glättungskondensators zum Minuspol des zweiten Glättungskondensators liegen.

Es wird davon ausgegangen, dass Ventile des ersten und des zweiten Netzstromrichters jeweils entsprechend einer Taktfrequenz geschaltet werden, die zu Spannungspulsen an dem jeweiligen Glättungskondensator in dem Zwischenkreis führen. Bei in der beschriebenen Weise galvanisch miteinander verbundenen Zwischenkreisen und damit miteinander verbundenen Netzstromrichtern sind die Pulsfrequenzen in den beiden Glättungskondensatoren gleich groß, aber um 180° phasenversetzt, d.h. die Spannungspulse treten um 180° phasenversetzt in den beiden Zwischenkreisen auf. Der Phasenversatz führt dazu, dass aufgrund der galvanischen Verbindung die Amplituden der Spannungspulse klein gehalten werden, wenn keine Glättungsdrossel vorhanden ist.

Es wird nun weiter vorgeschlagen, die gesamte Induktivität der Masche so zu wählen bzw. einzustellen, dass die Resonanzfrequenz der Masche, die insbesondere durch die Induktivität der Masche, und durch die Kapazitäten der Masche (d.h. die Reihenschaltung der Glättungskondensatoren) gegeben ist, in einem Bereich von +/-10 % um das Doppelte der Pulsfrequenz liegt. Vorzugsweise wird die Induktivität der Masche so gewählt, dass die Resonanzfrequenz der Masche (soweit es aufgrund der Toleranzen in den elektrischen Eigenschaften der verwendeten Teile möglich ist, genau) gleich der doppelten Pulsfrequenz ist.

In diesem Fall ist die Induktivität L insbesondere gegeben durch:

$$L = 1 / (8 * \pi^2 * f_p^2 * C),$$

wobei $f_p^2$ das Quadrat der Pulsfrequenz ist und wobei C die Kapazität eines der beiden Glättungskondensatoren ist, wenn die Kapazitäten der Glättungskondensatoren gleich groß sind (was üblicherweise der Fall ist). Sind die Kapazitäten nicht gleich groß, ist C die Kapazität des Ersatzwertes

C=2*(C1*C2)l(C1+C2), wobei C1 die Kapazität des einen und C2 die Kapazität des anderen Glättungskondensators ist.

Der Induktivitätswert, der der Formel genügt, wird im folgenden Resonanzinduktivität genannt, die zumindest teilweise durch zumindest ein diskretes Bauteil (im Folgenden: die Resonanzdrossel) gebildet sein kann. Die Gesamtinduktivität der Masche setzt sich daher immer zusammen aus den Induktivitäten der Leitungsverbindungen der Masche sowie optional einer (oder auch mehrerer) eventuell eingebrachten zusätzlichen (konzentrierten) Induktivität in Form einer Spule bzw. Drossel (der oder den Resonanzdrosseln). So ist es z.B. möglich die Kabel so lang zu wählen und/oder zusätzlich in Schleifen mit einer oder mehreren Windungen zu verlegen, was die Induktivität der Kabelverbindung erhöht, so dass eine Resonanzdrossel nicht erforderlich ist oder doch zumindest kleiner gewählt werden kann. In dem Fall besitzt die Resonanzdrossel auch nicht annähernd die volle Resonanzinduktivität, sondern die Summe der Leitungsinduktivitäten trägt wesentlich zur Resonanzinduktivität bei.

Der Begriff "Glättungskondensator" schließt auch den Fall mit ein, dass eine Mehrzahl der Glättungskondensatoren parallel und/oder in Reihe zueinander geschaltet ist. "Die Kapazität" des Glättungskondensators ergibt sich dann aus der Gesamtschaltung der Kondensatoren. Optional können weitere elektrische Bauteile in der Masche vorgesehen sein, z.B. eine in Reihe zu dem Glättungskondensator geschaltete Sicherung oder Trennschalter oder elektrische Widerstände.

Gegenstand der Erfindung ist auch ein entsprechendes Verfahren zum Betreiben der Anordnung in einer ihrer Ausgestaltungen. Insbesondere werden bei dem erfindungsgemäßen Verfahren die Netzstromrichter so betrieben, dass die genannten Pulsfrequenzen mit dem Phasenversatz entstehen. Die Pulsfrequenzen und ihr Phasenversatz sind jedoch auch ein gegenständliches Merkmal der Anordnung, wenn man bedenkt, dass die Steuerungseinrichtungen zur Steuerung des Betriebs der Netzstromrichter entsprechend eingestellt sind, um die Netzstromrichter mit den vorgegebenen Taktfrequenzen und Phasenlagen zu schalten.

Gegenstand der Erfindung ist ferner auch ein Verfahren zum Herstellen der erfindungsgemäßen Anordnung in einer ihrer Ausgestaltungen, wobei neben den Schritten der Bereitstellung sämtlicher Teile und Verbindungen der Anordnung auch der Schritt ausgeführt wird, dass die Induktivität der Masche in der beschriebenen Weise gewählt wird.

Das hier vorgestellte verteilte Stromrichtersystem löst das Problem der räumlichen Trennung der Netzstromrichter ohne zwischengeschaltete große Glättungsdrossel mit nur geringem Zusatzaufwand. Insbesondere wird nur eine verhältnismäßig kleine Induktivität in Form einer Resonanzdrossel oder lediglich eine Leitungsverbindung dessen Induktivitätswert insbesondere der o.g. Resonanzbedingung genügt, benötigt. Damit kann ein örtlich verteiltes Stromrichtersystem kostengünstig realisiert werden. Auch ein nachträglicher Umbau von reinen Gleichstromfahrzeugen zu Wechselstromfahrzeugen oder Fahrzeugen für wahlweise Gleichstrom- oder Wechselstromversorgung ist möglich.

In der Praxis und bezogen auf die oben erwähnten Zahlenbeispiele für die Frequenzen liegt die Resonanzfrequenz der Masche in dem Ausführungsbeispiel nicht unterhalb von 100 Hz, sondern deutlich darüber. Sie liegt in dem Ausführungsbeispiel jedoch unterhalb von 10 kHz.

Typischerweise liegt die doppelte Pulsfrequenz im Bereich um 0,7 - bis 3 kHz, so dass die Resonanzinduktivität, und damit auch die Induktivität der Resonanzdrossel, dadurch ca. 10 mal kleiner sein kann als eine Glättungsdrossel für eine Resonanzfrequenz von unter 100 Hz.

Insbesondere können die Netzstromrichter jeweils aus einem zweiphasigen 4-Quadrantensteller oder einem vierphasigen 4-Quadrantensteller bestehen. Ein vierphasiger 4-Quadrantensteller kann als zwei zweiphasige 4QS aufgefasst werden, die an einem gemeinsamen Glättungskondensator arbeiten. Beim Betrieb der vierphasigen 4-Quadrantensteller takten die beiden in einem Stromrichter vereinigten 4QS um 180° phasenversetzt. Dies führt zu einer resultierenden Pulsfrequenz von 4-facher Taktfrequenz am zugeordneten Glättungskondensator.

Für den Anschluss der Netzstromrichter an das Stromversorgungsnetz können ein oder mehrere Transformatoren vorgesehen sein, z. B. ein einziger Transformator mit einer Primärwicklung auf der Netzseite und zumindest zwei Sekundärwicklungen auf der Seite der Netzstromrichter.

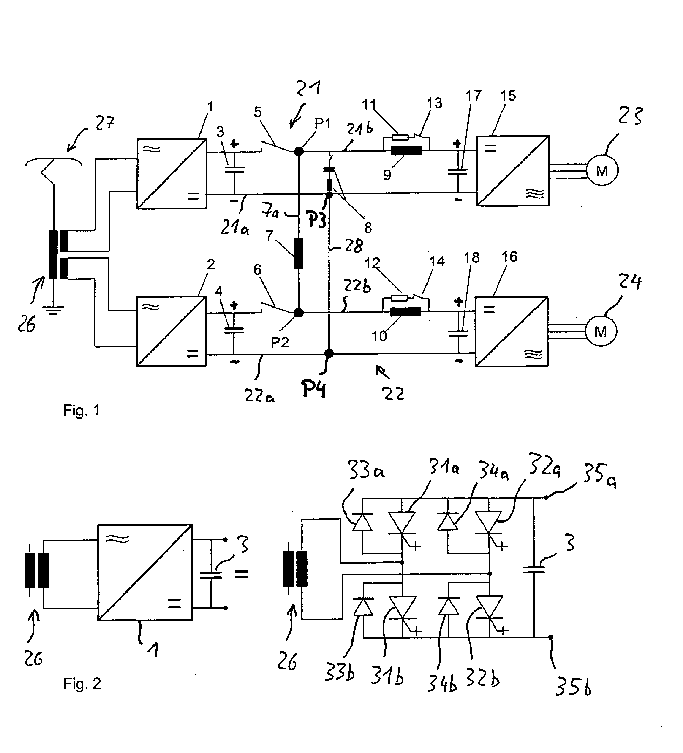

Auch soll der Fall eingeschlossen sein, bei dem ein oder mehrere Motorstromrichter (Bezugszeichen 16 in der später noch näher beschriebenen Figur 1) nicht an Punkt P2 sondern an Punkt P1 angeschlossen würde. Der dargestellte Fall ist nur insofern vorteilhafter, als über die dargestellte Resonanzdrossel (7) bzw. Verbindungsleitungen (7a, 28) bei gleicher Leistungsaufteilung kein zusätzlicher DG-Gleichstrom fließt.

An zumindest einem der beiden Gleichspannungs-Zwischenkreise bzw. der Glättungskondensatoren der Netzstromrichter kann eine Mehrzahl von Motorstromrichtern angeschlossen sein. Dabei kann jeder der Motorstromrichter über zumindest jeweils eine Glättungsdrossel an den zugeordneten Gleichspannungs-Glättungskondensator bzw. Zwischenkreis des Netzstromrichters angeschlossen sein.

Die Netzstromrichter können in einem Wagen oder in einem Triebfahrzeug (z. B. Lokomotive oder Triebfahrzeug eines Zugverbandes) oder z. B. in verschiedenen miteinander zusammen gekuppelten Wagen oder Triebfahrzeugen verteilt angeordnet sein. Selbst dann ist eine Taktung der Netzstromrichter möglich, die zu dem Phasenversatz von 180° der resultierenden Spannungspulse in den verschiedenen Glättungskondensatoren führt. Z. B. steuert eine zentrale Steuereinheit die Taktung der verteilten Netzstromrichter, indem sie den Taktversatz für jeden Netzstromrichter definiert vorgibt.

Insbesondere schließt die Erfindung auch den Fall mit ein, dass die Leitungslänge zwischen den 4-Quadrantenstellern genau so gewählt ist, dass keine zusätzliche, als (konzentriertes) Bauelement ausgeführte Induktivität (Resonanzdrossel) mehr erforderlich ist. Z.B. kann eine Leitung als Zwischenkreis-Verbindung mit einer entsprechend gewählten Länge im Fahrzeug als Schleife verlegt werden.

Die Dimensionierung der Induktivität der Masche beruht auf der folgenden wesentlichen Erkenntnis: Es muss keine Glättungsdrossel verwendet werden, die den Stromfluss, der sich wegen der phasenversetzten Spannungspulse einstellen kann, vollkommen unterdrückt. Dieses Prinzip würde angewendet, wenn die Resonanzfrequenz auf einen Wert unterhalb der genannten 100 Hz eingestellt würde. Vielmehr wird ein Resonanz-Wechselstrom durch die Zwischenkreis-Verbindung zwischen den Glättungskondensatoren zugelassen, der Ströme in der Größenordnung des Stromes auf der Wechselspannungsseite der Netzstromrichter führt. Dennoch kommt es zu einer erheblichen Verringerung des Stromes, der in die Glättungskondensatoren fließt. Versuche haben gezeigt, dass der Effektivwert dieses Stromes im Vergleich zu einer Anordnung mit großer Glättungsinduktivität auf ca. 1/4 reduziert wird, wodurch die elektrischen Verluste auf 1/16 reduziert werden, da diese quadratisch mit dem Effektivstrom ansteigen. Lässt man die Glättungsinduktivität weg, so erhält man bei nur geringen Leitungsinduktivitäten im Bereich 1 - 5 μH Effektivströme für die Glättungskondensatoren, die ebenfalls weit außerhalb des zulässigen Bereiches liegen. Da eine Resonanz in der Masche ausdrücklich angestrebt wird, kann eine entsprechende Induktivität in der Zwischenkreis-Verbindung zwischen den Glättungskondensatoren als Resonanzdrossel bezeichnet werden. Ein Beispiel für die Ströme mit und ohne Induktivität wird noch in der Figurenbeschreibung beschrieben.

Selbst wenn die doppelte Pulsfrequenz, mit der die Anregung des Resonanzstroms stattfindet, nicht exakt gleich der Resonanzfrequenz ist, wird noch ein ausreichender Strom in der Zwischenkreis-Verbindung zwischen den Glättungskondensatoren angeregt. Eine Abstimmung der Resonanzfrequenz auf einen Wert von +/- 10% des Doppelten der Pulsfrequenz ist daher ausreichend.

Dadurch, dass die Resonanzfrequenz der Masche auf relativ hohe Frequenzen eingestellt ist, reicht für beide Netzstromrichter ein einziger Saugkreis zur Dämpfung der zweiten harmonischen Schwingung der Netzfrequenz aus. Bei einem Netz mit 16 2/3 Hz Netzfrequenz beträgt diese Harmonische 33 Hz. Bei einem 50 Hz-Netz 100 Hz. Der Grund dafür liegt darin, dass der Leistungs- bzw. Stromfluss bei 33 Hz bzw. 100 Hz durch die sehr viel höhere Resonanzfrequenz der Masche praktisch nicht behindert wird.

Ein wesentlicher Vorteil der Erfindung ist die Möglichkeit der freien Platzierung der Netzstromrichter im Schienenfahrzeug oder Zugverband. Dies gilt auch für die nachträgliche Umrüstung von Fahrzeugen, die ursprünglich für die Versorgung aus Gleichspannungsnetzen konzipiert waren.

Der oben genannte zweite Aspekt kann mit dem Hauptaspekt kombiniert werden: Wie oben erwähnt, können beim Bremsen Überspannungen am Glättungskondensator des Netzstromrichters entstehen, z. B. wenn die elektrische Verbindung des Netzstromrichters zum Fahrdraht des Stromversorgungsnetzes kurzzeitig unterbrochen ist. Diese Überspannungen können durch einen Beschaltungswiderstand reduziert werden, der parallel zu der Glättungsdrossel, über die der Motorstromrichter mit dem Netzstromrichter verbunden ist, geschaltet ist. Beim Spannungsanstieg am Netzstromrichter-Glättungskondensator fließt nun ein Entlastungsstrom über diesen Widerstand in Richtung Motorstromrichter zurück, sodass der Spannungsanstieg am Glättungskondensator des Netzstromrichters im zulässigen Bereich bleibt. Typischer Weise sind 300V bis 600V Überspannung noch zulässig. Vorzugsweise ist jeweils ein Beschaltungswiderstand für jede der Glättungsdrosseln zwischen Motorstromrichter und Netzstromrichter vorgesehen.

Im Falle von Zweisystemfahrzeugen (d. h. Fahrzeugen, die sowohl einen Wechselstrom- als auch an Gleichstromnetzen betrieben werden können), die z. B. im Gleichstrombetrieb eine definierte, vorgegebene Glättungsinduktivität der Glättungsdrossel zwischen Motorstromrichter und Netzstromrichter benötigen, kann der Beschaltungswiderstand durch einen Schalter abtrennbar ausgeführt sein, sodass der Beschaltungswiderstand nur im Wechselstrombetrieb aktiv ist, d. h. nur im Wechselstrombetrieb Strom über ihn fließen kann.

Im Gleichstrombetrieb können auch die 4QS-Netzstromrichter mit Abtrennschützen abgetrennt werden, sodass keine Überspannungen an den Netzstromrichter-Glättungskondensatoren auftreten können.

Ausführungsbeispiele der Erfindung werden nun unter Bezugnahme auf die beigefügte Zeichnung beschrieben. Die einzelnen Figuren der Zeichnung zeigen:

Fig. 1 das Schaltbild einer Anordnung zur Antriebsenergieversorgung mit zwei Netzstromrichtem und zwei Motorstromrichtem,

Fig. 2 ein Ausführungsbeispiel für einen der in Fig. 1 dargestellten Netzstromrichter,

Fig. 3 ein Ausführungsbeispiel für eine alternative Ausgestaltung eines Netzstromrichters,

Fig. 4 ein Diagramm, das den zeitlichen Verlauf von Strömen und Spannungen beim Betrieb der Anordnung gemäß Fig. 1 beschreibt,

Fig. 5 ein Diagramm, das den zeitlichen Verlauf der Spannung in einem der Zwischenkreise gemäß Fig. 1 beschreibt,

Fig. 6 ein Diagramm, das den zeitlichen Verlauf der Spannung in einem der Glättungskondensatoren beschreibt, wenn die Induktivität der Zwischenkreis-Verbindung zwischen den Netzstromrichter- Glättungskondensatoren nicht gemäß der vorliegenden Erfindung gewählt ist, sondern so gewählt ist, dass eine wesentlich niedrigere Resonanzfrequenz erzielt wird, und

Fig. 7 ein Diagramm, das den zeitlichen Verlauf von Strömen und Spannungen beschreibt, falls die Induktivität der Masche lediglich 4 μH beträgt und keine zusätzliche Resonanzdrossel vorgesehen ist.

Fig. 1 stellt eine Anordnung zur Versorgung von zwei Fahrmotorgruppen 23, 24 eines Schienenfahrzeugs mit elektrischer Energie aus einem Wechselspannungs-Versorgungsnetz dar. Die Fahrmotoren bzw. Fahrmotorgruppen 23, 24 sind jeweils über eine dreiphasige Verbindung mit einem Motorstromrichter 15, 16 verbunden. Die Anordnung weist einen Stromabnehmer 27 auf, der mit der Primärwicklung eines Transformators 26 verbunden ist. Der Transformator 26 hat zwei Sekundärwicklungen, an die jeweils ein Netzstromrichter 1, 2 angeschlossen ist.

Ein erster Motorstromrichter 15 ist über eine galvanische Verbindung bestehend aus zwei Leitungen 21 a und 21 b (erster Gleichspannungs-Zwischenkreis) mit dem ersten Netzstromrichter-Glättungskondensator 3 verbunden. Der Gleichspannungs-Zwischenkreis 21 weist somit eine erste Leitungsverbindung 21 a auf einem ersten elektrischen Potenzial und eine zweite Leitungsverbindung 21 b auf einem zweiten elektrischen Potenzial auf. Ein zweiter Motorstromrichter 16 ist über ein zweites Leitungspaar 22a und 22b (zweiter Gleichspannungs-Zwischenkreis 22) mit dem zweiten Netzstromrichter-Glättungskondensator 4 verbunden. Der Gleichspannungs-Zwischenkreis 22 weist somit eine erste Leitungsverbindung 22a auf einem ersten elektrischen Potential und eine zweite Leitungsverbindung 22b auf einem zweiten elektrischen Potential auf. Über eine Verbindung 28 ist ein erstes Potenzial (z.B. Minuspol) des ersten Gleichspannungs-Glättungskondensators 3 und ein erstes gleichnamiges Potential (z.B. ebenfalls Minuspol) des zweiten Gleichspannungs-Glättungskondensators 4 miteinander verbunden. Genauso gut kann die Verbindung an irgendeiner beliebigen Klemmstelle im Zuge der Leitungsverbindung 21 a bzw. 22a erfolgen.

In den Leitungsverbindungen 21 b, 22b ist jeweils eine Glättungsdrossel 9, 10 angeordnet. Diese Drosseln könnten aber alternativ in der jeweils anderen Leitungsverbindung 21 a und 22a angeordnet sein. Ebenso könnte eine Drossel in der Verbindung 21 b und die andere Drossel in der Verbindung 22a angeordnet sein, oder aber eine Drossel ist in der Verbindung 21a und die andere in der Verbindung 22b angeordnet. Insofern ist die Darstellung in Fig. 1 nur eine spezielle Ausgestaltung der vorliegenden Erfindung.

Ferner sind am Netzstromrichter 1, 2 und am Motorstromrichter 15, 16 jeweils ein Glättungskondensator 3, 4 beziehungsweise 17, 18 angeordnet.

Die zweiten Potenziale der Netzstromrichter (z.B. Pluspole) sind über eine Verbindung 7a miteinander verbunden. Dabei weist die Zwischenkreis-Verbindung 7a eine Induktivität 7 auf, die zumindest teilweise durch ein oder mehrere diskrete Bauelemente, beispielsweise die in Fig. 1 dargestellte Spule (bzw. Resonanzdrossel) 7 , erzielt werden kann. Die Verbindung 7a kann ebenfalls an einer beliebigen Klemmstelle P1 bzw. P2 an der Verbindungsleitung 21 b bzw. 22b angeschlossen werden. Dabei ist es für die Erfindung unerheblich, ob sich zwischen dem Anschlusspunkt P1 bzw. P2 und dem Pol des Netzstromrichter-Glättungskondensators noch Trennschütze 5, 6 oder andere elektrische Bauteile befinden oder nicht. Ebenso kann die Verbindung 28 an einer beliebigen Klemmstelle P3 bzw. P4 der Verbindungsleitung 21 a bzw. 22a angeschlossen werden. Auch kann die dargestellte Induktivität in der Leitungsverbindung 28 oder auch an folgender Stelle angeordnet werden:

- in der Verbindungsleitung zwischen dem Pluspol des ersten Netzstromrichter-Glättungskondensators und dem Punkt P1,
- in der Verbindungsleitung zwischen dem Minuspol des ersten Netzstromrichter-Glättungskondensators und dem Punkt P3,
- in der Verbindungsleitung zwischen dem Pluspol des zweiten Netzstromrichter-Glättungskondensators und dem Punkt P2,
- in der Verbindungsleitung zwischen dem Minuspol des zweiten Netzstromrichter-Glättungskondensators und dem Punkt P4.

Auch ist es möglich die dargestellte Induktivität in kleinere Einheiten zu zerteilen und auf mehrere oder alle der genannten Einbauorte zu verteilen. Denn alle Einbauorte sind Teil der Resonanzmasche und für die Resonanzbedingung ist die Summe der Induktivitäten maßgeblich.

Die Netzstromrichter 1, 2 werden gegenphasig getaktet, sodass die Spannungspulse der an den Glättungskondensatoren anliegenden Spannungen, die also auf die Glättungskondensatoren 3 und 4 eingeprägt werden, um 180° gegeneinander phasenversetzt sind. Die Induktivität ist so gewählt, dass die Resonanzfrequenz der aus der Induktivität 7, den Netzstromrichter-Glättungskondensatoren 3, 4 und den Leitungsverbindungen 7a, 28 gebildeten Masche gleich der doppelten Pulsfrequenz der Spannungspulse eines Netzstromrichter-Glättungskondensators ist.

Ferner ist lediglich ein einziger Saugkreis 8 mit einer in Serienschaltung geschalteten aus einer Induktivität und einer Kapazität zwischen die Potenziale der Verbindungsleitungen 21 a und 21 b geschaltet. Genauso gut könnte der Saugkreis auch zwischen die Verbindungsleitungen 22a und 22b geschaltet sein. Ebenso wäre es möglich den Saugkreis zwischen die Potenziale 21 b und 22a zu schalten als auch zwischen die Potenziale 21 a und 22b. insofern ist die Darstellung in Fig. 1 nur eine spezielle Ausgestaltung der vorliegenden Erfindung. Auf Grund der Zwischenkreis-Verbindung 7a ist kein zweiter Saugkreis zur Dämpfung der zweiten harmonischen Frequenz des Versorgungsnetzes erforderlich. Die hier vorliegende Erfindung beschränkt sich jedoch nicht auf Anordnungen mit nur einem Saugkreis, sie gilt auch für den Fall mehrer Saugkreise. Die Möglichkeit mit nur einem Saugkreis ist lediglich die einfachste und daher vorteilhafteste.

In der speziellen, in Fig. 1 dargestellten Ausführungsform ist in den zweiten Verbindungsleitungen 21 b, 22b jeweils ein Schalter 5, 6 vorgesehen. Wenn die Schalter 5, 6 geöffnet sind, kann der rechte Teil der Zwischenkreise 21, 22 mit dem daran angeschlossenen Motorstromrichter 15, 16 an einem Gleichspannungs-Versorgungsnetz betrieben werden. In diesem Fall werden ebenfalls Schalter 13, 14 geöffnet, die in einem parallel zu der Glättungsdrossel 9, 10 verlaufenden Strompfad in Reihe zu jeweils einem Widerstand 11,12 angeordnet sind. Dadurch werden die Widerstände 11, 12 für den Betrieb am Gleichspannungs-Versorgungsnetz deaktiviert, d. h. es kann kein Strom parallel zu den Glättungsdrosseln 9, 10 in den Leitungsverbindungen 21 b, 22b fließen. Das Vorhandensein der Widerstände 11 und 12 sowie der Schalter 13 und 14 ist nicht notwendig für eine Anwendung der hier vorliegenden Erfindung, sie stellt nur eine besondere Ausgestaltung dar.

Fig. 2 zeigt den möglichen Aufbau eines der Netzstromrichter 1, 2 oder beider Netzstromrichter 1, 2 aus Fig. 1. Links in der Fig. 2 sind die Schaltsymbole des Netzstromrichters 1, des Transformators 26 mit einer der beiden Sekundärwicklungen und des Glättungskondensators 3 dargestellt. Ein Gleichheitszeichen symbolisiert, dass der Teil links des Gleichheitszeichens gleich der rechts des Gleichheitszeichens dargestellten Anordnung sein kann. Daraus wird erkennbar, dass der Stromrichter 1, 2 zwischen den Anschlusspunkten 35a, 35b für die zweite 21 b und die erste 21 a Leitungsverbindung zwei Stromfade aufweist, die jeweils durch eine Reihenschaltung zweier Ventile 31 a, 31 b bzw. 32a, 32b gebildet sind. Die Reihenschaltung zweier solcher Ventile nennt man auch "Stromrichterphase". Zum Anschluss an die Sekundärwicklung des Transformators 26 sind in jedem der Stromfade Verbindungspunkte zwischen den Ventilen 31 a, 31 b bzw. 32a, 32b mit den gegenüberliegenden Enden der Sekundärwicklung verbunden. Jedem der Ventile 31a, 31 b, 32a, 32b ist eine Freilaufdiode 33a, 33b, 34a, 34b antiparallel geschaltet. Es handelt sich somit um einen zweiphasigen Vierquadrantensteller. In einer solchen Anordnung ist der Anschluss 35a immer der Pluspol und 35b immer der Minuspol des Netzstromrichters.

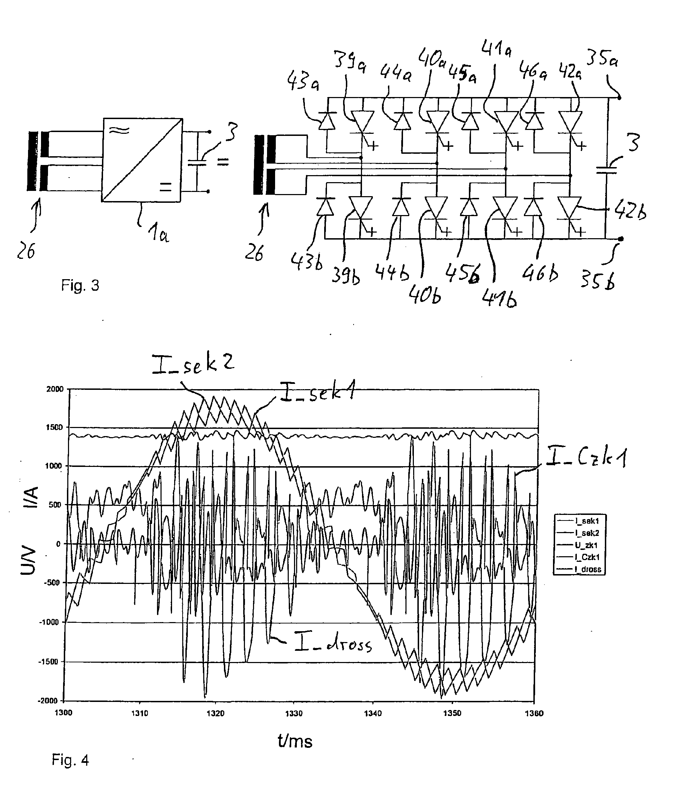

Fig. 3 zeigt, dass die Netzstromrichter anders als in Fig. 1 und Fig. 2 dargestellt auch vierphasige Vierquadrantensteller 1a sein können. Bei einem vierphasigen Vierquadrantensteller handelt es sich um zwei zweiphasige Vierquadrantensteller, die an denselben Glättungskondensator angeschlossen sind, die auf der Wechselstromseite aber vierphasig sind. Daher können die Anschlüsse auf der Wechselstromseite z. B. jeweils paarweise an verschiedene Sekundärwicklungen des Transformators 26 angeschlossen werden. Somit weist der vierphasige Vierquadrantensteller vier Stromfade mit jeweils zwei in Reihe geschalteten Ventilen 39a, 39b, 40a, 40b, 41 a, 41 b, 42a, 42b auf. Die jeweils antiparallel geschalteten Dioden sind mit 43a, 43b, 44a, 44b, 45a, 45b, 46a, 46b bezeichnet.

In Fig. 4 sind für die Anordnung gemäß Fig. 1 in der speziellen Ausgestaltung der Netzstromrichter nach Fig. 2, die Ströme I_sek1, I_sek2 durch die Sekundärwicklungen des Transformators 26 über eine Periode der Netzspannung dargestellt. Man erkennt auch auf der Wechselspannungsseite der Netzstromrichter die von dem Schalten der Netzstromrichter-Ventile verursachten Stromrippel (verursacht durch die beim Takten entstehenden Spannungspulse), die gegenphasig sind. Ferner sind der Ladestrom I_Czk1 des Glättungskondensators 3 und der Strom I_dross durch die Induktivität 7 der Zwischenkreis-Verbindung 7a dargestellt. Man erkennt, dass die beiden zuletzt genannten Ströme lediglich im Bereich von plus/minus 2000 A liegen. Außerdem erkennt man, dass der Strom I_dross durch die Induktivität 7 und der Strom I_Czk1 des Glättungskondensators 3 ebenfalls einander gegenphasig schwingen, wobei teilweise während einer Halbschwingung einem Amplitudenmaximum des einen Stroms zwei Amplitudenmaxima und ein lokales Minimum des anderen Stroms gegenüberstehen. Somit ergibt sich ein gewisser Auslöschungseffekt, der den Gesamteffektivwert des Kondensatorstroms verringert.

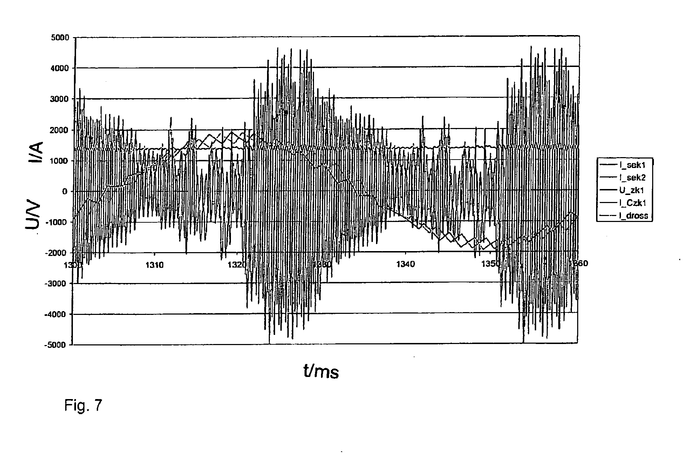

Experimente mit einer wesentlich kleinerer Induktivität 7, z.B. ohne konzentrierte Resonanzdrossel und bei zu kurzer Kabellänge, ergaben dagegen Ströme durch die Kabelverbindung und Ladeströme des Kondensators 3, die um mehr als einen Faktor zwei größer waren (Fig. 7). Dies führt zu unzulässig hohen Gesamteffektivwerten des Ladestroms, z. B. von deutlich mehr als 1700 A und würde die Kondensatoren schnell zerstören.

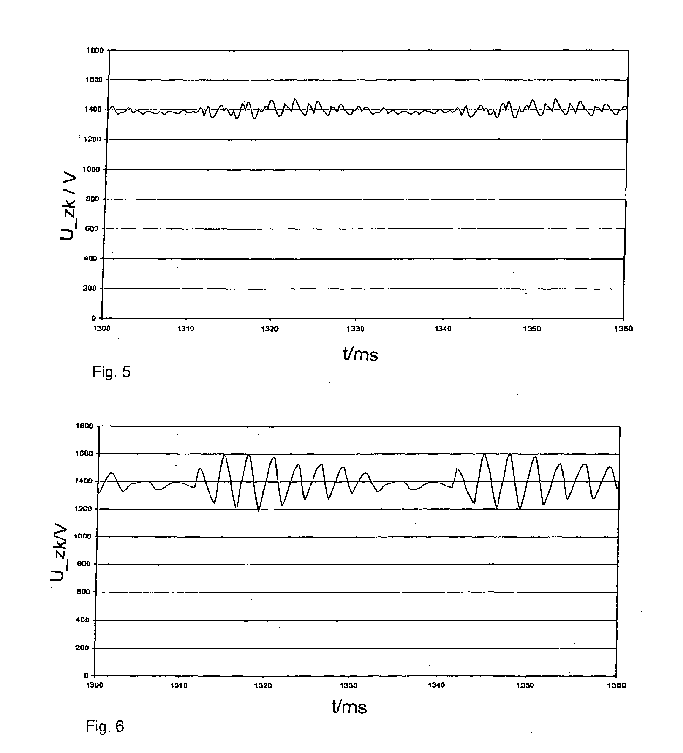

Auch die Welligkeit der Spannungen in den Glättungskondensatoren 3 und 4 war signifikant kleiner im Fall der erfindungsgemäßen Dimensionierung (z. B. 24 μH) der Induktivität in der Zwischenkreis-Verbindung (siehe Fig. 5) im Vergleich zu der klassischen Dimensionierung (z. B. 400 μH) der Induktivität als Glättungsdrossel (siehe Fig. 6).

**Patentansprüche**

1.   Anordnung für die Antriebsenergieversorgung eines Schienenfahrzeuges oder Schienenfahrzeug-Verbandes, wobei die Anordnung Folgendes aufweist:

- einen ersten Netzstromrichter (1) der einen Gleichspannungsanschluss aufweist, mit dem er an einen ersten Glättungskondensator (3) angeschlossen ist, wobei der Gleichspannungsanschluss einen Plus- und einen Minuspol aufweist, die an einen Plus- und Minuspol des Glättungskondensator (3) angeschlossen sind,

- einen zweiten Netzstromrichter (2), der einen Gleichspannungsanschluss aufweist, mit dem er an einen zweiten Glättungskondensator (4) angeschlossen ist, wobei der Gleichspannungsanschluss einen Plus- und einen Minuspol aufweist, die an einen Plus- und Minuspol des Glättungskondensator (3) angeschlossen sind

- mindestens einen Motorstromrichter (15, 16), der einen Gleichspannungsanschluss aufweist, mit dem er an einen dritten, dem jeweiligen Motorstromrichter (15, 16) zugeordneten Glättungskondensator (17, 18) angeschlossen ist, wobei der Gleichspannungsanschluss einen Plus- und einen Minuspol aufweist,

- eine elektrische Verbindung (21 b), die die Plus-Pole des ersten Netzstromrichters (1) und zumindest eines (15) der Motorstromrichter miteinander verbindet,

- eine elektrische Verbindung (22b), die die Plus-Pole des zweiten Netzstromrichters (2) und zumindest eines (16) der Motorstromrichter miteinander verbindet,

- eine elektrische Verbindung (21 a), die die Minus-Pole des ersten Netzstromrichters (1) und zumindest eines (15) der Motorstromrichter miteinander verbindet,

- eine elektrische Verbindung (22a), die die Minus-Pole des zweiten Netzstromrichters (2) und zumindest eines (16) der Motorstromrichter miteinander verbindet,

- eine erste galvanische Verbindung (7a), über die der Pluspol des ersten Glättungskondensators (3) mit dem Pluspol des zweiten Glättungskandensators (4) galvanisch verbunden ist,

- eine galvanische Verbindung (28), über die der Minuspol des ersten Glättungskondensators (3) mit dem Minuspol des zweiten Glättungskondensators (4) galvanisch verbunden ist, sodass zumindest der erste Glättungskondensator (3), der zweite Glättungskondensator (4), die erste galvanische Verbindung (7a) und die zweite galvanische Verbindung (28) eine Masche (Schaltungskreis) bilden, wobei Ventile (31, 32) des ersten und des zweiten Netzstromrichters (1, 2) jeweils entsprechend einer Taktfrequenz geschaltet werden, die zu Spannungspulsen mit einer Pulsfrequenz an dem ersten bzw. zweiten Glättungskondensator (3, 4) führen,

**dadurch gekennzeichnet, dass**

die gesamte Induktivität der Masche so gewählt ist, dass die Resonanzfrequenz der Masche in einem Bereich von plus/minus 10 % um das Doppelte der Pulsfrequenz liegt, wobei die Pulsfrequenzen an dem ersten und dem zweiten Glättungskondensator (3, 4) gleich groß sind, aber um 180° phasenversetzt sind.

2. Anordnung nach dem vorhergehenden Anspruch, wobei die gesamte Induktivität der Masche so gewählt ist, dass die Resonanzfrequenz der Masche, die zumindest durch die Induktivität der Masche und die Kapazitäten der Masche bestimmt ist, gleich dem Doppelten der Pulsfrequenz ist.

3. Schienenfahrzeug mit einer Anordnung nach einem der Ansprüche 1 bis 2.

4. Verfahren zum Herstellen einer Anordnung für die Antriebsenergieversorgung eines Schienenfahrzeuges, mit folgenden Schritten:

- Verbinden jeweils der Pluspole und der Minuspole eines ersten Netzstromrichters (1), eines dem ersten Netzstromrichter (1) zugeordneten ersten Glättungskondensators (3) und eines Motorstromrichters (15),
- Verbinden jeweils der Pluspole und der Minuspole eines zweiten Netzstromrichters (2), eines dem zweiten Netzstromrichter (2) zugeordneten zweiten Glättungskondensators (4) und des Motorstromrichters oder zumindest eines anderen Motorstromrichters (16),
- galvanisches Verbinden des Pluspols des ersten Glättungskondensators (3) mit dem Pluspol des zweiten Glättungskondensators (4) durch eine erste galvanische Verbindung (7a).
- galvanisches Verbinden des Minuspols des ersten Glättungskondensators (3) mit dem Minuspol des zweiten Glättungskondensators (4) durch eine zweite galvanische Verbindung (28), sodass zumindest der erste Glättungskondensator (3), der zweite Glättungskondensator (4), die erste galvanische Verbindung (7a) und die zweite galvanische Verbindung (28) eine Masche (Schaltungskreis) bilden,

**gekennzeichnet durch**

Einsteigen der gesamten Induktivität der Masche, sodass die Resonanzfrequenz der Masche, die zumindest **durch** die Induktivität der Masche und die Kapazitäten der Masche gegeben ist, in einem Bereich von plus/minus 10 % um das Doppelte einer Pulsfrequenz von Spannungspulsen in dem ersten und dem zweiten Glättungskondensator (3, 4) liegt, die beim Betrieb der Anordnung aufgrund von Schalthandlungen von Ventilen der Netzstromrichter (1, 2) entstehen, wobei die Pulsfrequenzen an dem ersten und dem zweiten Glättungskondensator (3, 4) gleich groß sind, aber um 180° phasenversetzt sind.

## Claims

1. Arrangement for a drive power supply for a rail vehicle or a rail vehicle unit, wherein the arrangement has the following:

    - a first power supply system converter (1) which has a DC voltage connection by means of which it is connected to a first smoothing capacitor (3), wherein the DC voltage connection has a positive pole and a negative pole which are connected to a positive pole and a negative pole of the smoothing capacitor (3),
    - a second power supply system converter (2) which has a DC voltage connection by means of which it is connected to a second smoothing capacitor (4), wherein the DC voltage connection has a positive pole and a negative pole which are connected to a positive pole and a negative pole of the smoothing capacitor (4),
    - at least one motor converter (15, 16), which has a DC voltage connection by means of which it is connected to a third smoothing capacitor (17, 18), which is associated with the respective motor converter (15, 16), wherein the DC voltage connection has a positive pole and a negative pole,
    - an electrical connection (21 b), which connects the positive poles of the first power supply system converter (1) and of at least one (15) of the motor converters to one another,
    - an electrical connection (22b), which connects the positive poles of the second power supply system converter (2) and of at least one (16) of the motor converters to one another,
    - an electrical connection (21 a), which connects the negative poles of the first power supply system converter (1) and of at least one (15) of the motor converters to one another,
    - an electrical connection (22a), which connects the negative poles of the second power supply system converter (2) and of at least one (16) of the motor converters to one another,
- a first conductive connection (7a), via which the positive pole of the first smoothing capacitor (3) is conductively connected to the positive pole of the second smoothing capacitor (4),
- a conductive connection (28), via which the negative pole of the first smoothing capacitor (3) is conductively connected to the negative pole of the second smoothing capacitor (4),
such that at least the first smoothing capacitor (3), the second smoothing capacitor (4), the first conductive connection (7a) and the second conductive connection (28) form a mesh (circuit), wherein valves (31, 32) in the first and in the second power supply system converters (1, 2) are each switched correspondingly to a clock frequency, leading to voltage pulses at a pulse repetition frequency at the first and second smoothing capacitors (3, 4),
**characterized in that**
the total inductance of the mesh is chosen such that the resonant frequency of the mesh is within a range of plus/minus 10% around twice the pulse repetition frequency, wherein the pulse repetition frequencies at the first and at the second smoothing capacitors (3, 4) are of the same magnitude, but are phase-shifted through 180°.

2. Arrangement according to the preceding claim, wherein the total inductance of the mesh is chosen such that the resonant frequency of the mesh, which is governed at least by the inductance of the mesh and the capacitances of the mesh, is equal to twice the pulse repetition frequency.

3. Rail vehicle having an arrangement according to one of Claims 1 or 2.

4. Method for producing an arrangement for the drive power supply for a rail vehicle, having the following steps:

- connection in each case of the positive poles and of the negative poles of a first power supply system converter (1), of a first smoothing capacitor (3), which is associated with the first power supply system converter (1), and of a motor converter (15),
- connection in each case of the positive poles and of the negative poles of a second power supply system converter (2), of a second smoothing capacitor (4), which is associated with the second power supply system converter (2), and of the motor converter or at least of one other motor converter (16),
- galvanic connection of the positive pole of the first smoothing capacitor (3) to the positive pole of the second smoothing capacitor (4) by means of a first conductive connection (7a),
- galvanic connection of the negative pole of the first smoothing capacitor (3) to the negative pole of the second smoothing capacitor (4) by means of a second conductive connection (28),
such that at least the first smoothing capacitor (3), the second smoothing capacitor (4), the first conductive connection (7a) and the second conductive connection (28) form a mesh (circuit),
**characterized by**
the total inductance of the mesh being set such that the resonant frequency of the mesh, which is governed at least by the inductance of the mesh and the capacitances of the mesh, is within a range of plus/minus 10% around twice a pulse repetition frequency of voltage pulses in the first and the second smoothing capacitors (3, 4), which voltage pulses occur during operation of the arrangement as a result of switching operations of valves in the power supply system converters (1, 2), wherein the pulse repetition frequencies at the first and at the second smoothing capacitors (3, 4) are of the same magnitude, but are phase-shifted through 180°.

**Revendications**

1. Agencement pour l'alimentation en énergie motrice d'un véhicule ferroviaire ou d'un convoi de véhicules ferroviaires, dans lequel l'agencement présente :

- un premier convertisseur de courant secteur (1) présentant une connexion de tension continue par laquelle il est connecté à un premier condensateur filtre (3), dans lequel la connexion de tension continue présente un pôle positif et un pôle négatif connectés à un pôle positif et un pôle négatif du condensateur filtre (3),
- un deuxième convertisseur de courant secteur (2) présentant une connexion de tension continue par laquelle il est connecté à un deuxième condensateur filtre (4), dans lequel la connexion de tension continue présente un pôle positif et un pôle négatif connectés à un pôle positif et un pôle négatif du condensateur filtre (3),
- au moins un convertisseur de courant moteur (15, 16) présentant une connexion de tension continue par laquelle il est connecté à un troisième condensateur filtre (17, 18) associé au convertisseur de courant moteur (15, 16) respectif, dans lequel la connexion de tension continue présente un pôle positif et un pôle négatif,
- une liaison électrique (21b) reliant ensemble les pôles positifs du premier convertisseur de courant secteur (1) et d'au moins l'un (15) des convertisseurs de courant moteur,
- une liaison électrique (22b) reliant ensemble les pôles positifs du deuxième convertisseur de courant secteur (2) et d'au moins l'un (16) des convertisseurs de courant moteur,

- une liaison électrique (21a) reliant ensemble les pôles négatifs du premier convertisseur de courant secteur (1) et d'au moins l'un (15) des convertisseurs de courant moteur,

- une liaison électrique (22a) reliant ensemble les pôles négatifs du deuxième convertisseur de courant secteur (2) et d'au moins l'un (16) des convertisseurs de courant moteur,

- une première liaison galvanique (7a) par laquelle le pôle positif du premier condensateur filtre (3) est relié de façon galvanique au pôle positif du deuxième condensateur filtre (4),

- une liaison galvanique (28) par laquelle le pôle négatif du premier condensateur filtre (3) est relié de façon galvanique au pôle négatif du deuxième condensateur filtre (4),

de sorte qu'au moins le premier condensateur filtre (3), le deuxième condensateur filtre (4), la première liaison galvanique (7a) et la deuxième liaison galvanique (28) forment une boucle (circuit de commutation), dans lequel des valves (31, 32) du premier et du deuxième convertisseur de courant secteur (1, 2) sont commutées respectivement selon une fréquence d'horloge conduisant à des impulsions de tension à une fréquence d'impulsion au niveau du premier ou du deuxième condensateur filtre (3, 4),

**caractérisé en ce que**

toute l'inductance de la boucle est choisie de telle sorte que la fréquence de résonance de la boucle se situe dans une plage de plus/moins 10% autour du double de la fréquence d'impulsion, les fréquences d'impulsion au niveau du premier et du deuxième condensateur filtre (3, 4) étant de même grandeur, mais déphasées de 180°.

2. Agencement selon la revendication précédente, dans lequel toute l'inductance de la boucle est choisie de telle sorte que la fréquence de résonance de la boucle, qui est déterminée au moins par l'inductance de la boucle et les capacités de la boucle, soit égale au double de la fréquence d'impulsion.

3. Véhicule ferroviaire comprenant un agencement selon l'une quelconque des revendications 1 à 2.

4. Procédé de fabrication d'un agencement pour l'alimentation en énergie motrice d'un véhicule ferroviaire, comprenant les étapes suivantes consistant à :

- relier respectivement les pôles positifs et les pôles négatifs d'un premier convertisseur de courant secteur (1), d'un premier condensateur filtre (3) associé au premier convertisseur de courant secteur (1) et d'un convertisseur de courant moteur (15),

- relier respectivement les pôles positifs et les pôles négatifs d'un deuxième convertisseur de courant secteur (2), d'un deuxième condensateur filtre (4) associé au deuxième convertisseur de courant secteur (2) et du convertisseur de courant moteur ou d'au moins un autre convertisseur de courant moteur (16),

- relier galvaniquement le pôle positif du premier condensateur filtre (3) au pôle positif du deuxième condensateur filtre (4) par une première liaison galvanique (7a),

- relier galvaniquement le pôle négatif du premier condensateur filtre (3) au pôle négatif du deuxième condensateur filtre (4) par une deuxième liaison galvanique (28),

de sorte qu'au moins le premier condensateur filtre (3), le deuxième condensateur filtre (4), la première liaison galvanique (7a) et la deuxième liaison galvanique (28) forment une boucle (circuit de commutation),

**caractérisé par** les étapes consistant à régler toute l'inductance de la boucle de telle sorte que la fréquence de résonance de la boucle, qui est donnée au moins par l'inductance de la boucle et les capacités de la boucle, dans une plage de plus/moins 10 % autour du double d'une fréquence d'impulsion des impulsions de tension dans le premier et le deuxième condensateur filtre (3, 4), qui sont créées en cours de fonctionnement de l'agencement en raison des opérations de commutation des valves des convertisseurs de courant secteur (1, 2), les fréquences d'impulsion au niveau du premier et du deuxième condensateur filtre (3, 4) étant de grandeur identique, mais déphasées de 180°.

Fig. 1

Fig. 2

Fig. 3

t/ms

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0514580 A1

- US 6137704 A